# EUROPÄISCHE PATENTSCHRIFT

(11) **EP 0 516 626 B1**
(45) Veröffentlichungstag und Bekanntmachung des Hinweises auf die Patenterteilung: **13.04.1994**
(21) Anmeldenummer: 91900800.3
(22) Anmeldetag: 28.12.1990
(51) Int. Cl.: B65G 15/08, B65G 39/12, B65G 21/00

(54) **ROLLENEINRICHTUNG FÜR SCHLAUCHGURTFÖRDERER UND DERGLEICHEN**
ROLLER DEVICE FOR TUBULAR BELT CONVEYORS AND THE LIKE
SYSTEME DE ROULEAUX POUR TRANSPORTEURS A COURROIE TUBULAIRE ET DE CE GENRE

(30) Priorität: 29.12.1989 DE 8915255 U
(43) Veröffentlichungstag der Anmeldung: 09.12.1992
(60) Teilanmeldung: 93114702.9
(73) Patentinhaber: VSR TECHNOLOGIE GmbH, 45472 Mülheim (DE)
(72) Erfinder: RAPPEN, Adalbert, D-45478 Mülheim/Ruhr (DE)
(74) Vertreter: Schumacher, Horst, Dr. Dipl.-Phys.
(86) Internationale Anmeldenummer: EP9002329
(87) Internationale Veröffentlichungsnummer: WO9109795

(56) Entgegenhaltungen:
- WO-A-88/04269
- AT-B- 390 775
- GB-A- 2 092 977

## Beschreibung

Die Erfindung betrifft eine Rolleneinrichtung nach dem Oberbegriff des Anspruchs 1.

Bei Schlauchgurtförderern werden die Gurte entweder als ebene Gurte oder in einer Teil- oder Vollkreisform hergestellt, gegenbenenfalls in einer Reihe von Formstationen zu einem Schlauch geformt und dann etwa kreisförmig über die Förderstrecke geführt. Es ist vorteilhaft, wenn der Gurt bereits bei der Auslieferung endlos zusammenvulkanisiert wird, da wegen der starken wechselnden Krümmungen an die Verbindungen besonders hohe Anforderungen gestellt werden. Zudem ist das Vulkanisieren auf der Baustelle schwierig und unwirtschaftlich. Der Gurt muß dann als Ganzes in die Gurtförderanlage, insbesondere in die den kreisförmigen Gurtquerschnitt umschließenden Rollenkäfige eingebaut werden. Hierzu sind die z.Zt. verwendeten käfigförmigen Rollenstationen mit den montierten gabelförmigen Halterungen für die Rollen äußerst ungeeignet.

Auch besteht häufig die Notwendigkeit, einen Schlauchförderer auf ungleichmäßigem Niveau zu errichten oder nachträglich aufgrund veränderter Endstationen oder kreuzender Leitungen und Verkehrsstränge die Rollenstationen in der Höhe zu verändern. Es ist schwierig, die genaue Form des Gurtes in den verschiedenen Formstationen für das Ein- und Ausformen sowie beim Öffnen für das Zwischenbeladen auszulegen. Auch für das Führen des Gurtes in vertikalen, horizontalen oder Raumkurven ist es notwendig und wünschenswert, eine einfache Anpassung der Rollenlage auf der Baustelle vorzunehmen. Bei Muldengurtförderern sind reibschlüssige Zwischenantriebe sehr uneffektiv wegen der fehlenden die übertragungskraft erhöhenden Anpreßkräfte. Erst recht besteht bei modernen Schlauchförderern der Bedarf auf einen einfachen Zwischenantrieb, so daß bei langen Förderstrecken die notwendige Antriebsleistung nicht mehr längsspannungserhöhend durch den gesamten Gurt geleitet werden muß.

Weiterhin ist es wünschenswert, die derzeitigen Rollenkäfige möglichst schmal auszubilden mit einem engen Abstand der Achsen der Gurtquerschnitte. Auch sollte die gleiche Rolleneinrichtung für die Führung der Gurte über- und nebeneinander verwendet werden.

Es ist Aufgabe der Erfindung, eine Rolleneinrichtung der eingangs genannten Art zu schaffen, die für die verschiedensten örtlichen Gegebenheiten und Anwendungsfälle nutzbar ist. Diese Aufgabe wird durch die Merkmale des Anspruchs 1 gelöst. Die Verwendung einer Einseitenrolle (Kragrolle), ist zwar von Muldengurtförderern her bekannt, aber dort nur für die gerasterte Einstellung.

Durch die Erfindung wird eine flexible Anpassung der Rolleneinrichtungen an die unterschiedlichsten Geländesituationen und Förderaufgaben ermöglicht. Dabei kann durch die Kombination standardisierter Rollen und Rollenhalterungen, Rahmenstreben und Rahmenstrebenverbindern praktisch allen bei Schlauchgurtförderern denkbaren örtlichen Gegebenheiten und Anwendungsfällen Rechnung getragen werden.

Zweckmäßige Ausgestaltungen des Erfindungsgegenstandes, die insbesondere die Systemflexibilität erhöhen und die Verwendung einfachste Bauteile gewährleisten sowie eine ganze Reihe von Sonderanwendungen ermöglichen, sind in weiteren Ansprüchen enthalten.

Die vorgenannten sowie die beanspruchten und in den Ausführungsbeispielen noch zu beschreibenden, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können. Dabei sind einige Sonderanwendungen, insbesondere nach den Figuren 6, 7, 8, 9 und/oder 10 auch unabhängig von dem Lösungsgedanken nach Anspruch 1 als selbständige Lösungen vorteilhaft anwendbar.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen erfindungsgemäßer Rolleneinrichtungen dargestellt sind. In der Zeichnung zeigen:
- Fig. 1a - 1g: sieben alternative Ausführungsformen einer erfindungsgemäßen Rolleneinrichtung im Schnitt quer durch die Fördergurte;
- Fig. 2a - 2f: Detaildarstellungen erfindungsgemäßer Rolleneinrichtungen, zum Teil in schematischer Darstellung, wobei Fig. 2a eine (ausschnittweise) Frontalansicht (Ansicht A gemäß Fig. 2b), Fig. 2b eine Ansicht von oben bei fehlendem Eckverbinder (Ansicht B gemäß Fig. 2a), Fig. 2c und 2d alternative Kragrollenhalterungen in Seitenansicht sowie Fig. 2e und 2f Achsialquerschnitte durch die Achsen erfindungsgemäßer Kragrollen im Befestigungsbereich darstellen;
- Fig. 3a - 3c: drei Rolleneinrichtungen zur Ermöglichung eines allmählichen Übergangs zwischen vertikaler und horizontaler Anordnung der beiden Gurttrume;
- Fig. 4a - 4b: eine Zwischenbefüllstation, wobei Fig. 4a eine Ansicht von oben (Ansicht C gemäß Fig. 4b) und Fig. 4b eine Frontalansicht der Rolleneinrichtung gemäß Fig. 4a (Ansicht D) darstellen (hierbei unterscheiden sich Fig.4a und 4b allerdings darin, daß gemäß Fig. 4a die Tragrollen für das Obertum nach oben außen weisen, während sie gemäß Fig. 4b nach unten innen weisen);
- Fig. 5a / 5b: zwei Ausführungsformen für extreme Raumverhältnisse, wobei durch die Anordnung gemäß Fig. 5a ein besonders niedriger und gemäß Fig. 5b ein besonders schmaler Rahmen ermöglicht wird;
- Fig. 6a / 6b: eine an Seilen getragene Schlauchgurtförderstrecke zur Überbrückung größerer Geländeeinschnitte, wobei in Fig. 6b die Schlauchfördergurte entfallen sind und die Rolleneinrichtungen nach unten abgesenkt sind;
- Fig. 7: eine ähnliche Anordnung wie in Fig. 6a, wobei der Schlauchfördergurt nur von wenigen Rolleneinrichtungen getragen wird, während die übrigen Rolleneinrichtungen an einer Wartungs- bzw. Montage- oder Demontagestation zusammengefaßt sind;
- Fig. 8a / 8b: ausschnittweise Darstellungen verschiedener Möglichkeiten für Zwischenantriebsstationen;
- Fig. 9: eine alternative Ausführung einer Zwischenantriebsstation;
- Fig. 10: eine Einrichtung zum Realisieren von Raumkurven der beiden Trume eines Schlauchförderers;
- Fig. 11a / 11b: eine Umlenkstation samt einer Einrichtung zur Relativlagefixierung benachbarter Rolleneinrichtungen, wobei Fig. 11a eine Ansicht von der Seite (Ansicht E gemäß Fi. 11b) und Fig. 11b dieselbe Einrichtung in Ansicht von oben (Ansicht F gemäß Fig. 11a) darstellt;
- Fig. 12a - 12c: von einer erfindungsgemäßen Rolleneinrichtung einen Winkelverbinder (Fig. 12a) und einen T-Verbinder (Fig. 12c) sowie eine Anwendung derartiger Verbinder (Fig. 12b in Ansicht G gemäß Figuren 12a und 12c).

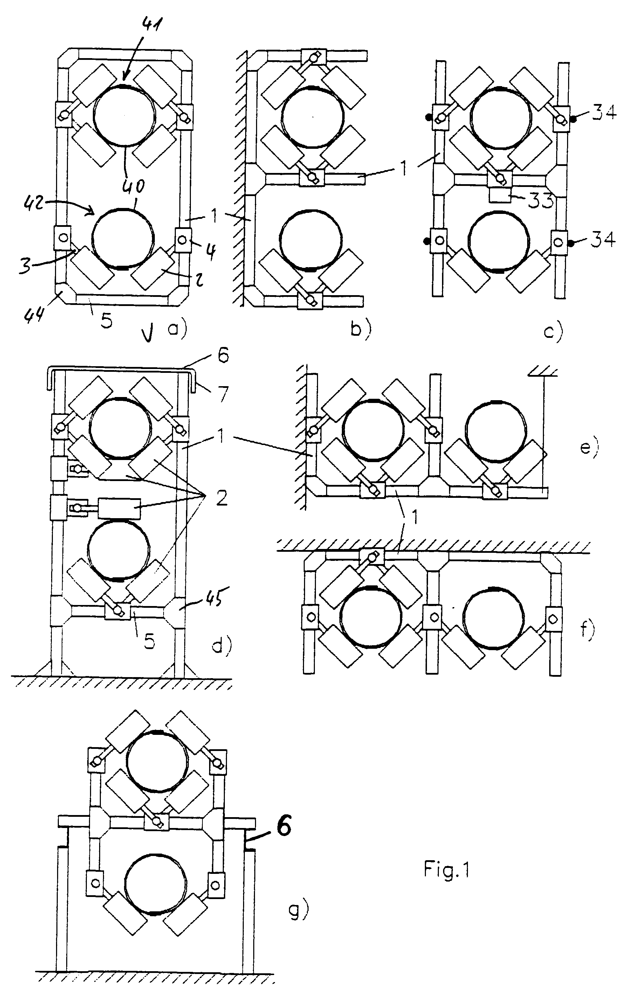

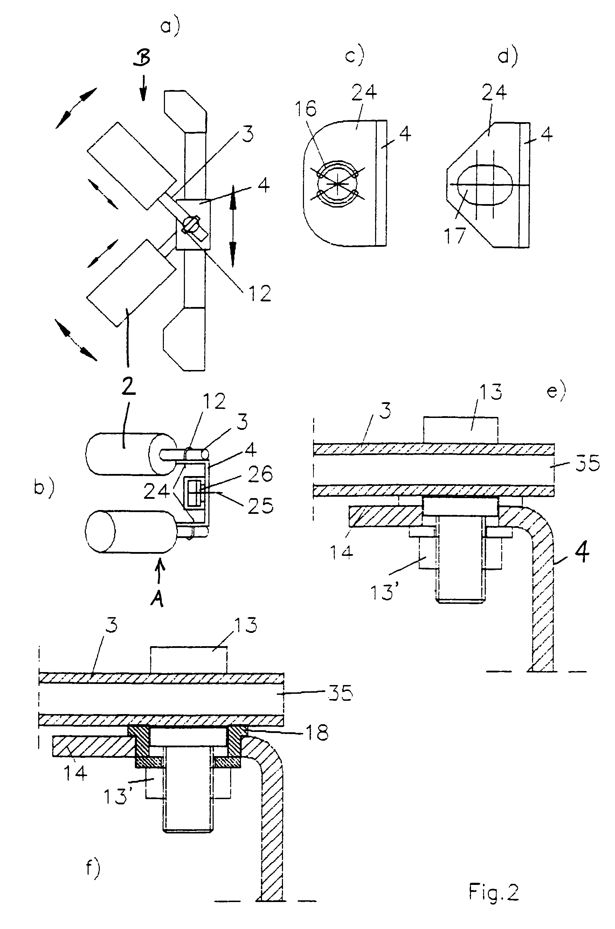

Die Rolleneinrichtung besteht im wesentlichen aus einem B-, O-, E-, H-, U-, F-, W- oder M-förmigen Rahmen 1 (Fig. 1a - g), in den der kreisförmige Ober- und Untertrum des Gurtes von oben und/oder unten oder seitlich eingeführt wird. An den Schenkeln dieses Rahmens befinden sich Führungsrollen (Kragrollen) 2, die vorzugsweise auf Achsen 3 mit einseitigem Achsenvorsprung gelagert sind. Die Achsen sind auf Halterungen 4 schwenkbar und in verschiedenen Winkelstellungen einstellbar (Fig. 2a) oder federnd befestigt (Anspruch 3). Sie können auch an oder zusammen mit der Halterung 4 gegenüber dem Rahmen vertikal und horizontal verstellt werden (Anspruch 4). Das gilt auch für den Zwischenrahmen (Rahmenstrebe 5), der unter besonderen Umständen fest aber vorzugsweise herausnehmbar und verstellbar in den U- oder H-Rahmen eingesetzt wird und diesen zu einem B- oder O-Rahmen ergänzt.

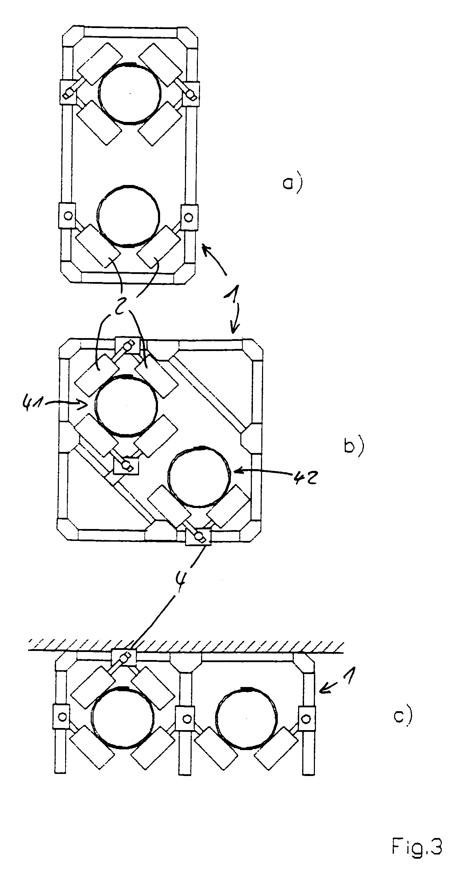

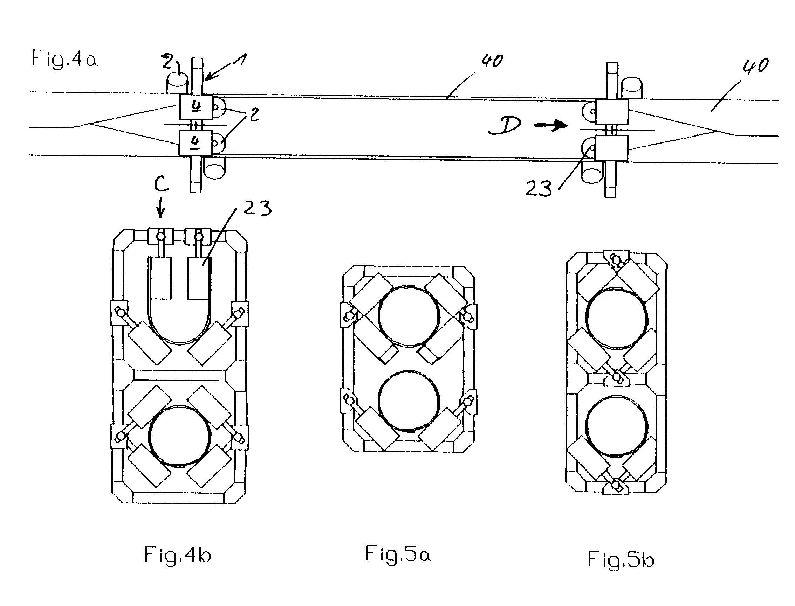

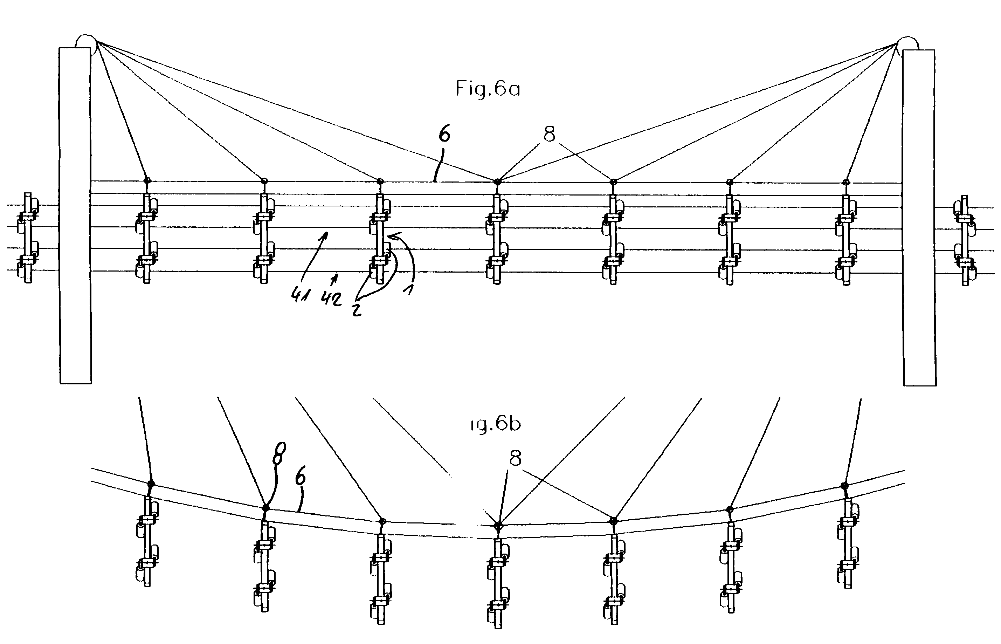

Durch diese universelle Anordnungsmöglichkeit können verschiedene Formstationen für das Ein- und Ausformen des Gurtes ausgebildet werden (Fig. 1 bzw. 4a). Auch läßt sich mit der Erfindung der Gurt im Ober- und Untertrum auf der Förderstrecke je nach Gurtart, Beladungsart, Betriebsweise und Fördermaterial auf der Förderstrecke parallel über- oder nebeneinander führen (Fig. 3a-c). Auch ist eine asymmetrische Rollenanordnung möglich bei ebenen und räumlichen Kurven (Fig. 3b). Schließlich läßt sich damit auch eine Rollenanordnung für das Öffnen des geschlossenen Gurtes bei einer Zwischenbeladung einsetzen (Fig. 4) . Bei allen ist also nicht nur die Einstellbarkeit der Rollen zur Schlauchformung, sondern auch die Montagemöglichkeit eines endlosen Gurtes sowie das Anheben und Absenken des gesamten Förderniveaus zur Anpassung an sich verändernde Förderhöhen möglich. Durch die Rollenrahmenverbindung sind besonders niedrige oder schmal bauende Förderer (Fig. 5a-b) möglich (Anspruch 6).

Die Rahmen werden einzeln auf dem Boden abgestützt oder seitlich oder an der Decke bzw. von oben abgehängt. Sie können auch auf einen durchgehenden Schienenstrang 6 aufgesetzt oder an diesem abgehängt werden (Anspruch 8). Dieser Schienenstrang wird besonders vorteilhaft aus dünngewalztem formstabilen Blech mit abgesetzten Seitenkanten 7 hergestellt und überdacht die gesamte Gurtbreite, so daß der Gurt vor Niederschlag und starker Berieselung durch Staub und dgl. geschützt ist (Fig. 1d) (Anspruch 8).

Die gesamte Gurtführungseinrichtung kann auch direkt oder mit einem Schienenstrang auf einfache Weise durch Seile an wenigen Pylonen abgehängt werden (Fig. 6a-b), so daß mit diesem System größere Geländequerschnitte überbrückt werden können. Wenn in diesen Schienen Querscharniere 8 (nach Anspruch 9) angebracht sind, ist eine besonders leichte Montage durch Anheben möglich und der Förderer kann zu Wartungszwecken bzw. zum Austausch von Rollen so weit abgesenkt werden, daß er von unten mit mormalen Mitteln erreicht wird. Auf diese Weise kann der Einbau von Inspektionsgängen vermieden werden.

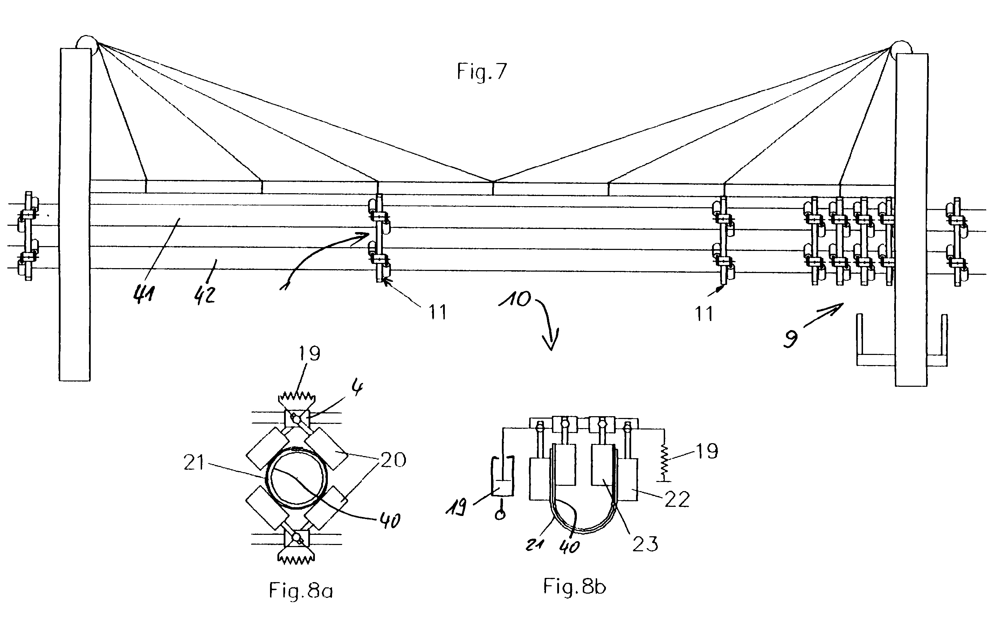

Das gilt auch, wenn die Rahmen 1 verschiebbar an einem abgehängten Schienensystem (Fig. 7) aufgehängt werden (Anspruch 15). Dann können bei leerem Gurt die Rollenrahmen zu festen Stationen 9 beiderseits des Geländeeinschnittes 10 verzogen werden, wobei der Gurt nur in wenigen zusätzlich eingerollten Stationen 11 gehalten wird.

Die universelle Befestigung der Tragrollen 2 mittels einer Halterung 4 an den Rahmen erfolgt (nach Anspruch 2) mittels Schrauben oder Einhängen und in besonderer Ausführungsform durch Festklemmen mittels Schellen, Bügelschrauben 12 oder, vorzugsweise, (nach Anspruch 7) ein Klemmstück 13 mit Kontermutter 13' an die Wangen 14 der Halterung 4 oder direkt an den Rahmen 15 (siehe Fig. 2a). Dabei haben in einer bevorzugten Ausführungsform die Wangen oder Rahmen ringförmige 16 oder parallele Langlöcher, für die winkel- oder achsparallele Verstellung der Rollen, wenn sie mittels paariger Verschraubung festgeklemmt werden und einzelne Langlöcher 17 bei Befestigung durch ein Klemmstück (Fig. 2).

Durch eine schwenkbare Befestigung der Rollen 2, z.B. mittels eines Verdrehstückes 18 und mittels gefederter Anpressung 19 (nach Fig. 8a/b) lassen sich Einseitenrollen 2 besonders gut für das Aufbringen einer elastischen Anstellung verwenden (Fig. 8b).

Ein neuartiger Antrieb (nach Anspruch 16) für Schlauchgurtförderer ist durch die Erfindung möglich (Fig. 8a bis 9). Durch gefederte bzw. angepreßte einander gegenüber stehende Rolle 20; 30, 31 wird ein Zwischenantriebsgurt 21 reibungserhöhend gegen den Schlauchgurt gedrückt. Alternativ können äußere Anpreßrollen 22 auch gegen innere Rollen 23 drücken, die von oben, z.B. bei Zwischenaufgaben in das Innere den Schlauch öffnend weisen. Durch die Federung (nach Anspruch 17) können die Rollen bei Grobstücken nachgeben, so daß auch enge Schlauchgurtförderer bei Grobstücken verwendet werden können.

Durch eine axiale Verstellbarkeit (nach Anspruch 3) der Rollen (Fig. 2a bis 2f) kann eine Rahmensystemgröße bei in weiten Grenzen einstellbaren Rollen für unterschiedliche Gurtdurchmesser verwendet werden, insbesondere, wenn die Rollen mittels einer Halterung am Rahmen befestigt werden. Die Halterung 4 hat vorzugsweise zwei Wangen 24 in einem Abstand von mehr als dem Rollendurchmesser (nach Anspruch 5), so daß ein Rollensatz mit zwei sich kreuzenden Rollenachsen (nach Anspruch 5) an dieser Halterung befestigt werden kann bei genügendem Verstellspielraum. Durch Montage der Halterung 4 auf der Inner- oder Außenseite des Rahmens 1, mit ein- oder auswärtig gerichteten Wangen besteht ein großer Verstellbereich. Durch Verdrehen um eine horizontale Querachse 25 können die Halterungen auch bei vertikalem Rahmen der Form des ansteigenden Schlauchgurtes angepaßt werden (nach Anspruch 3). Die Halterung hat auf der Befestigungsfläche zum Rahmen in Verschieberichtung oder Verdrehrichtung Langlöcher oder sie ist auf andere Weise verstellbar mit dem Rahmen verbunden, beispielsweise durch schellenartiges Umfassen des Rahmens und Einklemmen 26 desselben.

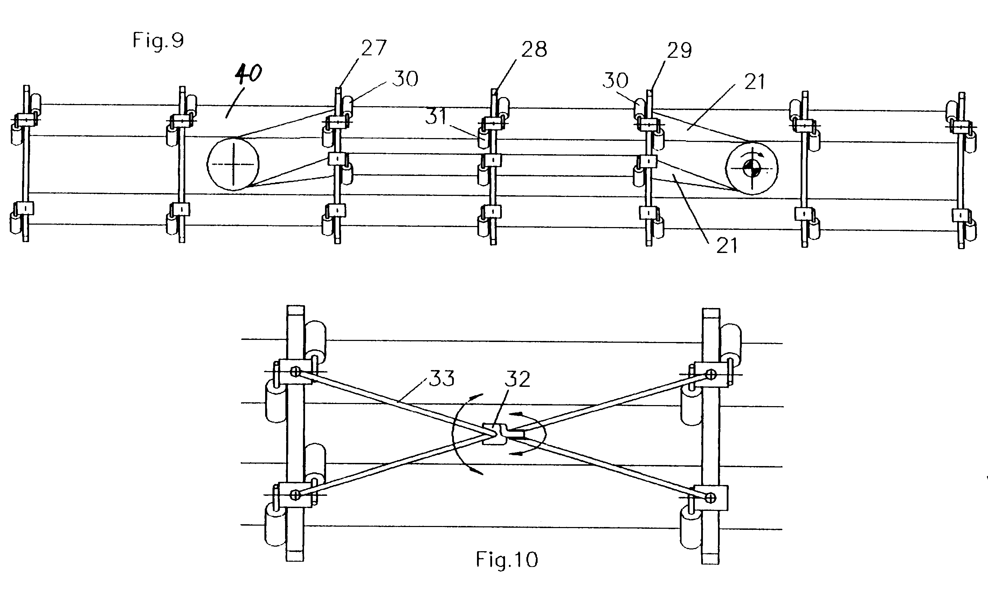

Durch die (bevorzugte) Verwendung von mindestens 3 Rahmen 27, 28, 29 mit dem erfindungsgemäßen Rollensystem im Bereich eines Zwischenantriebes (Fig. 9) wird der Gurt 40 durch die Rollen 30 des äußeren ersten oder letzten Rahmens niedergehalten, während die Rollen 31 eines Mittelrahmens (zweiter Rahmen) den Zwischenantriebsgurt 21 und den Fördergurt 40 reibungserhöhend anhebt, so daß die gewünschte Zusatzantriebsleistung zusammen mit weiteren reibungserhöhenden Maßnahmen übertragen werden kann.

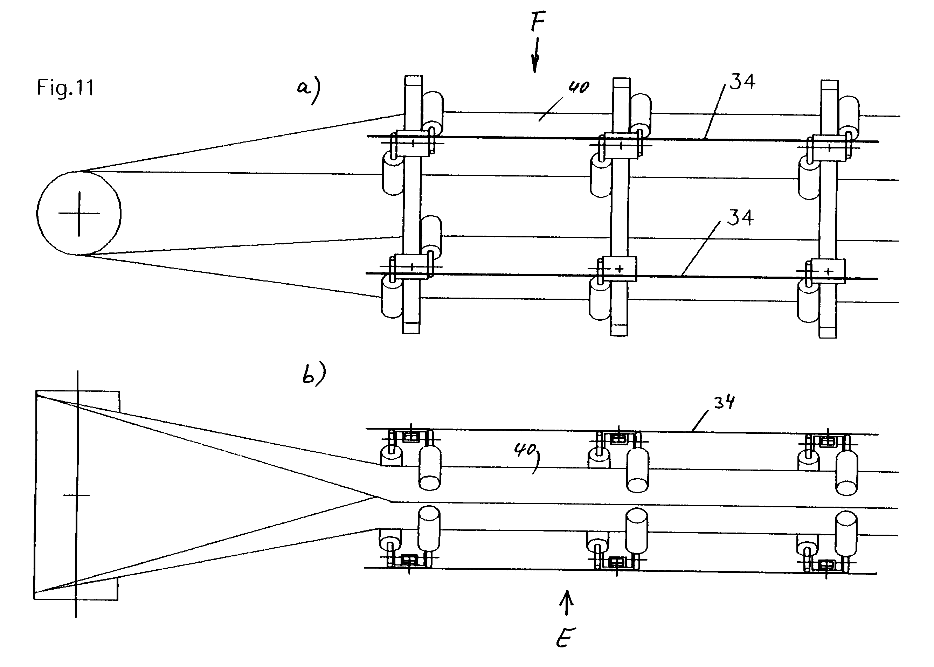

Die Einstellung des Gurtverlaufes bei horizontalen und vertikalen Kurven wird erleichtert, wenn die Führungsrollen nur für die Nachjustierung benutzt werden und die ganzen Rahmen gegeneinander, dem Gurtverlauffolgend, um Doppelgelenke 32 verschwenkt werden (Fig. 10 und Anspruch 10). Das kann dadurch geschehen, daß das für die Längskraftübertragung sowieso nützliche Längselement 33 (Fig. 1c und 10) biegesteif mit dem Rahmen und die einzelnen Längselemente winkeleinstellbar verbunden sind. Längselemente können auch einzeln mit dem Rahmen und vorzugsweise direkt mit den Halterungen winkeleinstellbar durch Langlöcher verbunden sein. Die Verspannung der Rahmen gegeneinander erfolgt mit Seilen 34, die entweder mit Klemmen oder durch Einhängen von Preßhülsen in entsprechende Aufnahmen der Halterungen befestigt werden (Fig. 1c und 11, Anspruch 12).

Die Rollenachsen sind vorzugsweise hohl 35, so daß sie durch Einstecken eines Stabes leicht verstellt und dann befestigt werden können (Fig. 2e und f und Anspruch 13). Durch entsprechende Anschlüsse kann aber auch Druckluft, eine Flüssigkeit oder Dampf zum Heizen, Kühlen und Schmieren in die Rollen geleitet werden. Aber auch Sensoren zur Signalaufnahme können in die Bohrung eingebracht werden.

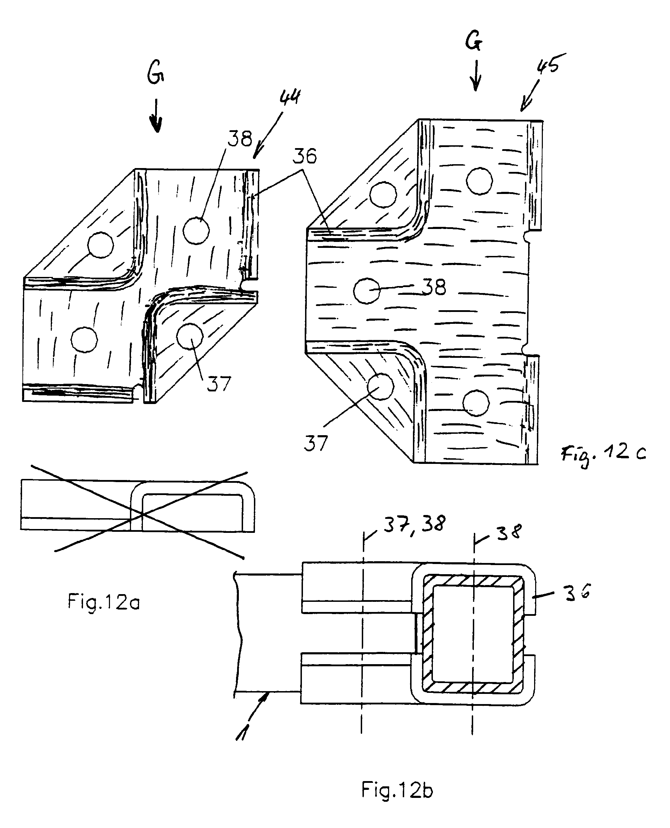

Die Einzellängen des Rahmens werden untereinander verschweißt oder vorzugsweis durch Schrauben mittels Winkel- 44 (Fig. 12a) oder Stoßklemmstücken 45 (Fig. 12b) verbunden (Anspruch 14). Seitliche Führungsflächen 36 dienen zur Momentübertragung, während versetzte Bohrungen 37 zum Verklemmen und mittige Bohrungen 38 Längskraftübertragung Schrauben verwendet werden.

## Patentansprüche

1. Rolleneinrichtung zur Formung und Führung eines vorzugsweise schlauchförmigen Fördergurtes **d**adurch gekennzeichnet, daß Führungsrollen (2) , die den Gurt (40) mindestens tangential berühen, einen einseitigen Wellenstumpf (Achse 3) haben und direkt mit diesem oder mittels einer Halterung (4) an einem den Ober- und Untertrum (41 und 42) zumindest teilweise umfassenden Rahmen (1) befestigt sind.

2. Rolleneinrichtung nach Anspruch 1, dadurch gekennzeichnet, daß die Rollenachsen (3) auf die Rahmen (1) und ggf. Halterungen (4) aufgeschraubt und vorzugsweise aufgeklemmt werden.

3. Rolleneinrichtung nach Anspruch 1 oder 2, dadurch gekennzeichnet, daß die Rollenachsen (3) in der Führungsebene universell verstellt und, vorzugsweise, sowohl geschwenkt als auch axial oder quer verschoben und/oder samt der Führungsebene, insbesondere um eine Querachse (25), verschwenkt werden können.

4. Rolleneinrichtung nach einem der Ansprüche 1 bis 3, dadurch gekennzeichnet, daß mindestens eine Verstellung zwischen Halterung (4) und Rahmen (1) möglich ist, wobei die Halterung (4) an dem seitlichen oder den horizontalen Führungsrahmen kontinuierlich oder in bestimmten Rasterabständen verdrehbar und/oder höhen- und/oder seitenverstellbar befestigt wird, vorzugsweise durch Langlöcher (17), Führungskanten oder den Rahmen umfassende Schellen (12).

5. Rolleneinrichtung nach einem der Ansprüche 1 bis 4, dadurch gekennzeichnet, daß die an einem Rahmenteil befestigten und verschiedene Führungsaufgaben habenden Rollen (2) mit ihren Achsen (3) in einem solchen Abstand, der mindestens größer ist als der Rollendurchmesser, voneinander befestigt werden, daß die Rollen (2) oder ihre Achse (3) sich kreuzen.

6. Rolleneinrichtung nach einem der Ansprüche 1 bis 5, dadurch gekennzeichnet, daß die Rahmen (1) den Schlauchgurt (40) eng umschließen und die Rollen (2) mit ihren Achsen (3), insbesondere mittels der Halterung (4) in einem solchen Abstand von den Rahmen befestigt sind, daß die Rollenmäntel zwar die Rahmen überlappen, sich aber frei bewegen können (Fig. 5a/b).

7. Rolleneinrichtung nach einem der Ansprüche 1 bis 6, dadurch gekennzeichnet, daß die Klemmbefestigung der Rollenachse (3) durch Bügelschrauben (12) oder Schellen, mittels ringförmiger Langlöcher (16) und/oder, vorzugsweise, durch Klemmstücke (13) mit mindestens einer Querbohrung zur Aufnahme der Rollenachse (3) und mit einer Kontermutter (13'), insbesondere mittels eines Langloches, erfolgt.

8. Rolleinrichtung nach einem der Ansprüche 1 bis 7, dadurch gekennzeichnet, daß die seitlichen Schenkel des Rahmens (1) von einer, insbesondere im wesentlichen U-förmigen, breiten Schiene (6) abgehängt werden und/oder die Schiene einen, vorzugsweise, wesentlichen Teil der Breite des Schlauchgurtes (40) abdeckt.

9. Rolleneinrichtung nach einem der Ansprüche 1 bis 8, dadurch gekennzeichnet, daß Schienen (6) Quergelenke (8) zur leichten Montage und drehbaren Befestigung um eine horizontale Achse besitzen und , vorzugsweise, an diesen Quergelenken die Abstützung und vorzugsweise Abhängung bei der Überbrückung längerer Förderwege erfolgt.

10. Rolleneinrichtung nach einem der Ansprüche 1 bis 9, dadurch gekennzeichnet, daß die benachbarten Rahmen (1) durch ein, vorzugsweise im Bereich der Rahmenmitte verlaufendes, Längselement (33; 34) verbunden sind und das Längselement mit dem Rahmen (1) vorzugsweise biegesteif und die einzelnen Längselemente mindestens um eine Achse vorzugsweise aber um zwei Achsen verschwenkbar fest verbunden sind oder daß Längselemente mit beiden Rahmen um, insbesondere zwei, Achsen verschwenkbar fest verbunden sind.

11. Rolleneinrichtung nach einem der Ansprüche 1 bis 10, dadurch gekennzeichnet, daß die Halterung (4) mindestens zwei Langlöcher auf einer in der Verschwenkebene liegenden Fläche hat, durch die Längselemente, vorzugsweise mittels Laschen, gegenüber dem Rahmen verschwenkt und biegesteif festgesetzt werden können.

12. Rolleneinrichtung nach einem der Ansprüche 1 bis 11, dadurch gekennzeichnet, daß die Rahmen (1) durch Seile (34) oder dergleichen verspannt werden, die vorzugsweise durch Verklemmen mit den Halterungen (4) oder durch Einlegen von Preßhülsen in Aufnahmen der Halterungen längskraftübertragend verbunden sind.

13. Rolleneinrichtung nach einem der Ansprüche 1 bis 12, dadurch gekennzeichnet, daß die Rollenachsen (3) hohl (35) ausgebildet sind und, in besonderen Ausführungsformen, Anschlüsse für das Durchleiten von Schmier-, Heiz- oder Kühlmittel haben oder Einsätze mit Sensoren für die Aufnahme von Signalen über Momente, Temperatur, Geräusch, Vibration, Drehzahl.

14. Rolleineinrichtung nach einem der Ansprüche 1 bis 13, dadurch gekennzeichnet, daß die Stöße der Rahmen durch Formstücke (39) gebildet werden, vorzugsweise durch die Enden der Rahmenprofile halbschalenartig umfassende Winkel und Stumpfstoßstücke, die die Enden durch Seitenführungen (36) biegemomentübertragend festklemmen und beispielsweise durch Schrauben auf Dauer mit den Enden fixiert werden können.

15. Rolleneinrichtung nach einem der Ansprüche 1 bis 14, dadurch gekennzeichnet, daß die Rahmen (1) auf mindestens einer, insbesondere festen, Schiene (6) oder einem Seil verschiebbar montiert und vorzugsweise abgehängt sind und die Rahmen, vorzugsweise durch Seile, verschoben werden können und daß die Rahmen bei der Überbrückung von Freiflächen zu Wartungszwecken und dergleichen an seitliche Zugangsstellen verschoben und, ggf., insbesondere gleichzeitig, andere Rahmen von der Seite über den freitragenden Gurtteil verschoben werden können.

16. Rolleneinrichtung nach einem der Ansprüche 1 bis 15, dadurch gekennzeichnet, daß ein Zwischenantriebsgurt (21) an dem Fördergurt (40) angreift.

17. Rolleneinrichtung nach einem der Ansprüche 1 bis 16, dadurch gekennzeichnet, daß die Rollen (2) unter Vorspannung an den Gurt (40) in Anlage gehalten werden.

## Claims

1. A roller device for shaping and guiding a preferably tubular conveyor belt, **characterized in that** guide rollers (2) touching the belt (40) at least tangentially have a stub shaft (axle 3) at one end and are secured directly by the said stub shaft or by means of a retaining means (4) to a frame (1) surrounding the upper and lower strands (41 and 42) at least in part.

2. A roller device according to Claim 1, **characterized in that** the roller axles (3) are bolted and preferably clamped onto the frame (1) and, where present, the retaining means (4).

3. A roller device according to Claim 1 or 2, **characterized in that** the roller axles (3) can be adjusted universally in the guide plane and can preferably be both pivoted and displaced axially or transversely and/or, together with the guide plane, can be pivoted in particular about a transverse axis (25).

4. A roller device according to one of Claims 1 to 3, **characterized in that** at least one adjustment is possible between the retaining means (4) and the frame (1), wherein the retaining means (4) is rotatable continuously or at specific grid intervals on the lateral guide frame or the horizontal guide frames and/or is secured so as to be vertically and/or laterally adjustable, preferably by elongate holes (17), guide edges or clips (12) embracing the frame.

5. A roller device according to one of Claims 1 to 4, **characterized in that** the rollers (2) secured to part of the frame and having different guiding tasks are secured with the axles (3) thereof at such a distance - which is at least greater than the diameter of the rollers - from one another that the rollers (2) or the axles (3) thereof cross one another.

6. A roller device according to one of Claims 1 to 5, **characterized in that** the frames (1) closely surround the tubular belt (40) and the rollers (2) with the axles (3) thereof are secured at such a distance from the frames, in particular by means of the retaining means (4), that although the roller surfaces overlap the frames they can move move freely (Figs. 5a/b).

7. A roller device according to one of Claims 1 to 6, **characterized in that** the clamping fastening of the roller axle (3) takes place by stirrup bolts (12) or clips, by means of annular elongate holes (16) and/or, preferably, by clamping members (13) with at least one transverse bore for receiving the roller axle (3) and with a lock nut (13'), in particular by means of an elongate hole.

8. A roller device according to one of Claims 1 to 7, **characterized in that** the lateral arms of the frame (1) are suspended from a wide, in particular substantially U-shaped, rail (6), and/or the rail covers a preferably substantial part of the width of the tubular belt (40).

9. A roller device according to one of Claims 1 to 8, **characterized in that** rails (6) comprise transverse joints (8) for easy assembly and fastening so as to be rotatable about a horizontal axis, and the support and preferably suspension when bridging relatively long conveying paths preferably takes place on the said transverse joints.

10. A roller device according to one of Claims 1 to 9, **characterized in that** the adjacent frames (1) are connected by a longitudinal member (33; 34) preferably extending in the region of the middle of the frames, and the longitudinal member is securely connected to the frame (1) preferably in a bending-resistant manner and the individual longitudinal members are securely connected to the frame (1) so as to be pivotable at least about one axis but preferably about two axes, or longitudinal members are securely connected to the two frames so as to be pivotable about, in particular, two axes.

11. A roller device according to one of Claims 1 to 10, **characterized in that** the retaining means (4) has at least two elongate holes on a face situated in the pivoting plane, through which longitudinal members, preferably by means of straps, can be pivoted towards the frame and can be secured in a bending-resistant manner.

12. A roller device according to one of Claims 1 to 11, **characterized in that** the frames (1) are tensioned by cables (34) or the like which are preferably connected by clamping to the retaining means (4) or by the insertion of pressing sleeves into receiving means in the retaining means so as to transmit longitudinal forces.

13. A roller device according to one of Claims 1 to 12, **characterized in that** the roller axles (3) are made hollow (35), and, in particular embodiments, have sockets for the passage of lubricants, heating agents or coolants, or inserts with sensors for receiving signals on moments, temperature, noise, vibration [or] rotational speed.

14. A roller device according to one of Claims 1 to 13, **characterized in that** the joints of the frames are formed by moulded members (39), preferably by angle members and butt joint members which embrace the ends of the frame profiles in the manner of a half shell and which clamp the ends by lateral guides (36) so as to transmit bending moments and which can be fixed for a long period to the ends by bolts for example.

15. A roller device according to one of Claims 1 to 14, **characterized in that** the frames (1) are mounted and preferably suspended on at least one, preferably fixed, rail (6) or a cable so as to be displaceable, and the frames can be displaced, preferably by cables, and in the bridging of open areas the frames can be displaced to lateral access points for maintenance purposes and the like and, where appropriate, other frames can be displaced, in particular at the same time, from the side over the freely supporting portion of the belt.

16. A roller device according to one of Claims 1 to 15, **characterized in that** an intermediate driving belt (21) engages on the conveyor belt (40).

17. A roller device according to one of Claims 1 to 16, **characterized in that** the rollers (2) are held resting against the belt (40) with pre-tensioning.

## Revendications

1. Dispositif à rouleaux pour l'assemblage et le guidage d'une courroie de transport de préférence tubulaire, caractérisé en ce que des rouleaux de guidage (2), qui touchent la courroie (40) au moins de manière tangentielle, présentent un bout d'arbre unilatéral (axe 3) et sont fixés, directement par l'intermédiaire de celui-ci ou au moyen d'une fixation (4), à un cadre (1) comprenant au moins partiellement la bande supérieure et la bande inférieure (41 et 42).

2. Dispositif à rouleaux selon la revendication 1, caractérisé en ce que les axes de rouleau (3) sont vissés sur les cadres (1) et, éventuellement, sur les fixations (4) et y sont de préférence fixés par serrage.

3. Dispositif à rouleaux selon la revendication 1 ou 2, caractérisé en ce que les axes de rouleau (3) peuvent être réglés universellement dans le plan de guidage et, de préférence, être aussi bien pivotés qu'être décalés axialement ou transversalement et/ou être pivotés avec le plan de guidage, en particulier autour d'un axe transversal (25).

4. Dispositif à rouleaux selon l'une des revendications 1 à 3, caractérisé en ce qu'au moins un déplacement entre la fixation (4) et le cadre (1) est possible, la fixation (4) étant maintenue de manière rotative aux cadres de guidage latéral ou horizontaux en continu ou à des intervalles d'arrêts déterminés, et/ou de manière à être réglable en hauteur et/ou latéralement et, ce, de préférence par des lumières (17), des bords de guidage ou des colliers (12) encerclant le cadre.

5. Dispositif à rouleaux selon l'une des revendications 1 à 4, caractérisé en ce que les rouleaux (2) et leurs axes (3) fixés à une partie de cadre et ayant diverses fonctions de guidage sont fixés à une distance les uns des autres qui est au moins supérieure aux diamètres des rouleaux, de sorte que les rouleaux (2) ou leurs axes (3) se croisent.

6. Dispositif à rouleaux selon l'une des revendications 1 à 5, caractérisé en ce que les cadres (1) entourent étroitement la courroie tubulaire (40) et les rouleaux (2) et leurs axes (3) sont fixés en particulier au moyen de la fixation (4) à une telle distance des cadres que les jupes de rouleau recouvrent certes les cadres mais elles peuvent se mouvoir librement (fig. 5a/5b).

7. Dispositif à rouleaux selon l'une des revendications 1 à 6, caractérisé en ce que la fixation par serrage des axes de rouleau (3) s'effectue par des boulons étriers (12) ou colliers au moyen de lumières annulaires (16) et/ou de préférence par des pièces de serrage (13) avec au moins un perçage transversal pour le logement de l'axe de rouleau (3) et avec un contre-écrou (13') en particulier au moyen d'une lumière.

8. Dispositif à rouleaux selon l'une des revendications 1 à 7, caractérisé en ce que les branches latérales du cadre (1) sont suspendues à un large rail (6) en particulier sensiblement en forme de U et/ou les rails recouvrent une partie de préférence considérable de la largeur de la courroie tubulaire (40).

9. Dispositif à rouleaux selon l'une des revendications 1 à 8, caractérisé en ce que des rails (6) comprennent des articulations transversales (8) pour un montage facile et une fixation rotative autour d'un axe horizontal et, de préférence, la prise d'appui et, de préférence, la suspension s'effectuent au niveau de ces articulations transversales pour couvrir de plus longs parcours de transport.

10. Dispositif à rouleaux selon l'une des revendications 1 à 9, caractérisé en ce que les cadres voisins (1) sont reliés par un élément longitudinal (33, 34) s'étendant de préférence dans la zone du milieu du cadre et l'organe longitudinal étant relié au cadre (1), de préférence de manière rigide par rapport à la flexion et en ce que les différents éléments longitudinaux sont reliés fixement de manière pivotante au moins autour d'un axe mais de préférence autour de deux axes ou bien que des éléments longitudinaux sont reliés fixement de manière pivotante aux deux cadres autour de deux axes en particulier.

11. Dispositif à rouleaux selon l'une des revendications 1 à 10, caractérisé en ce que la fixation (4) présente au moins deux lumières sur une surface se trouvant dans le plan de pivotement par l'intermédiaire de laquelle les éléments longitudinaux peuvent pivoter par rapport au cadre et être fixés, de préférence au moyen de languettes, de manière rigide par rapport à la flexion.

12. Dispositif à rouleaux selon l'une des revendications 1 à 11, caractérisé en ce que les cadres (1) sont tendus par des cables (34) ou similaires qui sont reliés de préférence par serrage avec les fixations (4) ou par l'insertion de manchons presseurs dans des logements des fixations en transférant la force longitudinale.

13. Dispositif à rouleaux selon l'une des revendications 1 à 12, caractérisé en ce que les axes de rouleau (3) sont réalisés creux (35) et, en particulier dans des formes de réalisation, présentent des raccords pour l'écoulement d'agents réfrigérants, chauffants ou lubrifiants ou des inserts avec des capteurs pour la réception de signaux concernant les moments, la température, le bruit, la vibration, le nombre de tours.

14. Dispositif à rouleaux selon l'une des revendications 1 à 13, caractérisé en ce que les jointures des cadres sont constituées par des pièces moulées, de préférence par les pièces de joints aboutés et les angles entourant à la manière d'une demi-coquille les extrémités des profilés de cadre, pièces qui serrent les extrémités par des guides latéraux (36) de manière à transférer le moment de flexion et peuvent être fixées durablement aux extrémités, par exemple par des boulons.

15. Dispositif à rouleaux selon l'une des revendications 1 à 14, caractérisé en ce que les cadres (1) sont montés sur au moins un rail particulièrement fixe (6) ou sur un câble de manière mobile et sont de préférence accrochés et les cadres (1) peuvent être déplacés de préférence par des câbles et en ce que les cadres peuvent être amenés à des endroits d'accès latéraux lors du franchissement de surfaces libres dans un but de maintenance et similaires et, éventuellement, en particulier simultanément, d'autres cadres peuvent être déplacés par le côté au-dessus de la partie de courroie suspendue.

16. Dispositif à rouleaux selon l'une des revendications 1 à 15, caractérisé en ce qu'une courroie d'entraînement intermédiaire (21) vient en prise avec la courroie de transport (40).

17. Dispositif à rouleaux selon l'une des revendications 1 à 16, caractérisé en ce que les rouleaux (2) sont maintenus contre la courroie (40) par précontrainte.
